# EUROPEAN PATENT SPECIFICATION

(11) **EP 3 540 548 B1**
(45) Date of publication and mention of the grant of the patent: **22.12.2021**
(21) Application number: 19159875.4
(22) Date of filing: 28.02.2019
(51) Int. Cl.: G05B 23/02, G05B 19/406

(54) **DIAGNOSIS APPARATUS, DIAGNOSIS METHOD AND COMPUTER READABLE MEDIUM**
DIAGNOSEVORRICHTUNG, DIAGNOSEVERFAHREN UND COMPUTERLESBARES MEDIUM
APPAREIL DE DIAGNOSTIC, PROCÉDÉ DE DIAGNOSTIC ET SUPPORT LISIBLE PAR ORDINATEUR

(30) Priority: 12.03.2018 JP 2018044791
(43) Date of publication of application: 18.09.2019
(73) Proprietor: Ricoh Company, Ltd., Tokyo 143-8555 (JP)
(72) Inventor: UMEZAWA, Tomoki, Ohta-ku, Tokyo 143-8555 (JP)
(74) Representative: Watkin, Timothy Lawrence Harvey

(56) References cited:
- WO-A2-2018/030422
- US-A1- 2017 083 016
- US-A1- 2017 329 303

## Description

### BACKGROUND

### Technical Field

This disclosure relates to a diagnosis apparatus, a diagnosis method, and carrier means.

### Background Art

Machining machines processes work pieces by applying a method of predicting and estimating abnormality and machining quality of machine tools by detecting physical quantities of the machining machines, such as current value of motors, vibration, and force of the machine tools.

Apparatuses that detect such physical quantities and determine abnormality of tools are known. For example, JP-2017-033346-A discloses an apparatus that synchronizes time series data of machine information such as load of a main spindle and event data of the apparatus to detect abnormality of a machining operation performed in the machining machines.

United States Patent Application Publication No. US2017/0083016 discloses a manufacturing equipment diagnosis support system including: a data collector which collects and records respective data in plural apparatuses to be monitored provided in manufacturing equipment; a data analysis device; and a display.

International Patent Application Publication Number WO2018/030422 discloses a diagnosis device including a first acquiring unit which acquires, from a target device, context information corresponding to a current operation; a second acquiring unit which acquires detection information output from a detecting unit that detects a physical quantity that changes according to operations performed by the target device; a first transmitting unit which transmits that acquired context information to a learning device; a second transmitting unit which transmits the acquired detection information to the learning device; a third acquiring unit which acquires a model corresponding to the transmitted context information, from the learning device that determines whether any pieces of context information are identical or similar to each other and combines models generated from pieces of the detection information corresponding to the pieces of identical or similar context information; and a first determining unit which determines whether an operation performed by the target device is normal by using the detection information and the model.

United States Patent Application Publication No. US2017/0329303 discloses an information processing apparatus which acquires detection information of a physical quantity that changes according to an operation state of a target device, transmits an acquisition request to the target device at a predetermined time, to acquire context information relating to an operation status of the target device in response to the acquisition request, specifies a processing period in which the target device is in the middle of processing the target object based on the predetermined time and the context information, extracts processing period detection information of the specified processing period from the detection information, and determines an occurrence of a defect relating to processing by the target device during the processing period based on the processing period detection information and the context information used for specifying the processing period.

However, since the time series data of machine information and the event data of the apparatus are acquired using different interfaces (I/Fs), it is difficult to synchronize the time series data of machine information and the event data of the apparatus. Therefore, it is difficult to detect abnormality in each stage of a plurality of stages performed for the machining operation in the machining machines.

### SUMMARY

As one aspect of the present invention, a diagnosis apparatus for diagnosing a target apparatus in accordance with claim 1 is provided.

As another aspect of the present invention, a method of diagnosing a target apparatus in accordance with claim 4 is provided.

As to the above described aspects of the present invention, the diagnosis apparatus and the diagnosis method can easily detect abnormality at each processing stage.

### BRIEF DESCRIPTION OF THE DRAWINGS

A more complete appreciation of the description and many of the attendant advantages and features thereof can be readily obtained and understood from the following detailed description with reference to the accompanying drawings, wherein:
FIG. 1 illustrates an example of an overall configuration of a diagnosis system according to an embodiment;
FIG. 2 illustrates an example of a hardware block diagram of a processing machine according to an embodiment;
FIG. 3 illustrates an example of a hardware block diagram of a diagnosis apparatus according to the embodiment;
FIG. 4 is an example of a schematic diagram of a grouping operation of a diagnosis apparatus according to the embodiment;
FIG. 5 is an example of data of waveforms of detection information grouped by the diagnosis apparatus according to the embodiment;
FIG. 6 is an example of frequency spectrum of detection information grouped by the diagnosis apparatus according to the embodiment;
FIG. 7 is an example of a flow chart illustrating the steps of a procedure of grouping by the diagnosis apparatus according to the embodiment;
FIG. 8 is an example of a flow chart illustrating the steps of a procedure of generating a model by the diagnosis apparatus according to the embodiment;
FIG. 9 is an example of a flow chart illustrating the steps of a procedure of diagnosis processing by the diagnosis apparatus according to the embodiment;
FIG. 10 is an example of a flow chart illustrating the steps of a procedure of grouping by a diagnosis apparatus according to a first variant example of the embodiment; and
FIG. 11 is an example of a flow chart illustrating the steps of a procedure of grouping by the diagnosis apparatus according to a second variant example of the embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

In addition, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

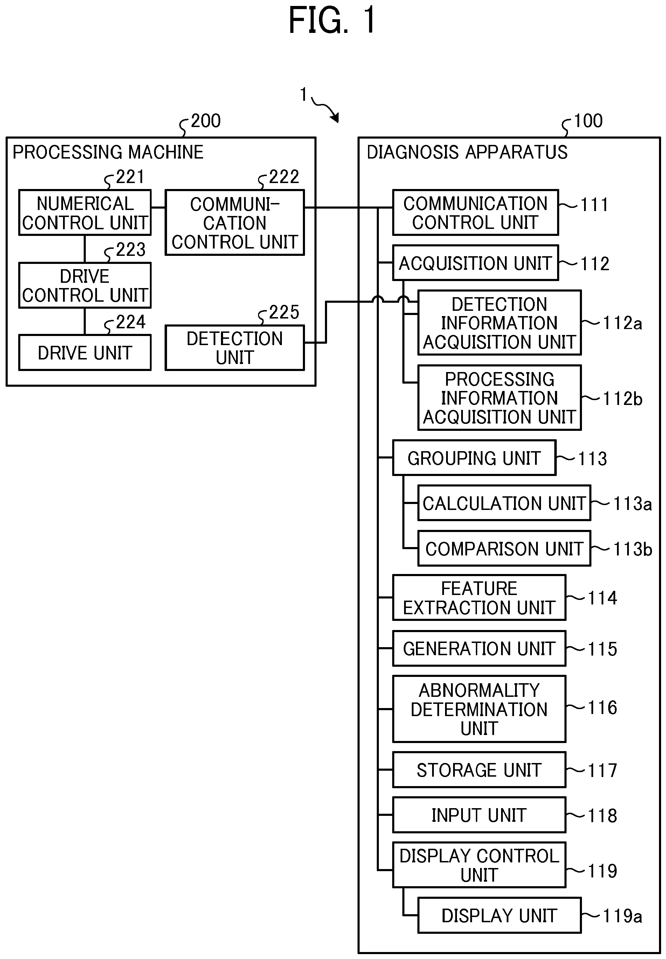

Hereinafter, a description is given of a diagnosis apparatus, a diagnosis method, and carrier means according to one or more embodiments of the present invention by referring to FIGs. 1 to 11.

### Configuration of Diagnosis System:

FIG. 1 illustrates an example of an overall configuration of a diagnosis system 1 according to an embodiment of the present invention. The diagnosis system 1 includes, for example, a diagnosis apparatus 100 and a processing machine 200 connectable to the diagnosis apparatus 100, in which the processing machine 200 (e.g., machining machine) is a target apparatus to be diagnosed by the diagnosis apparatus 100. The processing machine 200 performs a plurality of processing stages to process a target article, in which each of the plurality of processing stages respectively corresponds to each of a plurality of processing information. The diagnosis apparatus 100 includes, for example, a grouping unit 113 and an abnormality determination unit 116. The grouping unit 113 identifies each one of the plurality of processing stages as a different processing stage with each other based on processing information uniquely associated with each one of the plurality of processing stages, receives a plurality of detection information output from a detection unit 225 configured to detect physical quantity that changes in the processing machine 200 depending on processing at each one of the plurality of the processing stages performed in the processing machine 200 while performing a normal operation in the processing machine 200, groups the plurality of detection information of the processing machine 200, which are received while performing the normal operation in the processing machine 200, into a plurality of groups, based on contents of the plurality of detection information, by corresponding each one of the groups respectively to each one of the plurality of processing stages to prepare reference detection information for each one of the plurality of processing stages, receives a plurality of detection information output from the detection unit 225 while performing a diagnosis target operation in the processing machine 200, and determines whether abnormality occurs in the processing machine 200 during the diagnosis target operation based on the reference detection information and the plurality of detection information output from the detection unit 225 during the diagnosis target operation. Hereinafter, a description is given of the diagnosis system 1 of the embodiment.

As illustrated in FIG. 1, the diagnosis system 1 includes, for example, the processing machine 200 and the diagnosis apparatus 100 connectable to the processing machine 200. The processing machine 200 is, for example, a machining machine that uses one or more machining tools to perform machining, such as cutting, grinding and polishing of a target article to be processed (e.g., machined). The processing machine 200 is an example of a target apparatus to be diagnosed by the diagnosis apparatus 100. The diagnosis apparatus 100 is communicably connected to the processing machine 200 to diagnose an operation of the processing machine 200 to determine whether abnormality occurs in the processing machine 200. The processing machine 200 is described as an example of processing apparatuses.

As illustrated in FIG. 1, the processing machine 200 includes, for example, a numerical control unit 221, a communication control unit 222, a drive control unit 223, a drive unit 224, and a detection unit 225.

The numerical control unit 221 is a functional unit that controls processing performable by the drive unit 224 by applying the numerical control (NC). For example, the numerical control unit 221 generates and outputs numerical control data used for controlling the operation of the drive unit 224. Further, the numerical control unit 221 outputs context information (hereinafter, also referred to as processing information) indicating an operating state of the drive unit 224, which drives one or more tools, to the communication control unit 222. For example, the numerical control unit 221 outputs a cutting feed signal indicating a segment data corresponding to an ON/OFF signal indicating a period starting from a feeding operation of a target article to be processed by the tools until the completion of the actual processing of the target article.

The context information includes information that is defined for each type of operation performed in the processing machine 200. In addition to the above-described cutting feed signal, the context information can include various information, such as identification information on the processing machine 200, identification information on the drive unit 224 (e.g., identification information on tool), configuration information such as a diameter of a tool driven by the drive unit 224 and materials of the tool, and information on processing conditions such as operating state of the drive unit 224, total used time of the drive unit 224 accumulated from a use-start, processing load of the drive unit 224, rotational speed of the drive unit 224, and driving speed of the drive unit 224, but not limited thereto.

The numerical control unit 221 sequentially transmits, for example, the context information corresponding to the current operation (current operating state) of the processing machine 200 to the diagnosis apparatus 100 via the communication control unit 222. While processing a process target article, the numerical control unit 221 changes the type of drive unit 224 to be driven and a drive state (e.g., rotational number, rotation speed) of the drive unit 224 depending on the stages of processing. Each time the type of operation is changed, the numerical control unit 221 sequentially transmits the context information corresponding to the type of the changed operation to the diagnosis apparatus 100 via the communication control unit 222.

The communication control unit 222 is a functional unit that controls communication with an external apparatus, such as the diagnosis apparatus 100. For example, the communication control unit 222 transmits the context information corresponding to the current operation (current operating state) of the processing machine 200 to the diagnosis apparatus 100.

The drive control unit 223 is a functional unit for driving and controlling the drive unit 224 based on the numerical control data set by the numerical control unit 221.

The drive unit 224 is a functional unit, which is a target of a drive control by the drive control unit 223. The drive unit 224 is driven under the control of the drive control unit 223. The drive unit 224 is, for example, an actuator (motor) or the like, which is controlled by the drive control unit 223. The drive unit 224 can be any driver, such as an actuator as long as the drive unit 224 is used for the processing and controlled by applying the numerical control. Further, the drive unit 224 can be provided with two or more.

The detection unit 225, such as a detector, detects physical quantity or quantities (physically detectable states) occurred in the processing machine 200 and outputs information on the detected physical quantity to the diagnosis apparatus 100 as detection information, such as sensor data. The physical quantity occurred in the processing machine 200 includes, for example, vibration, sound (audio), and noise.

For example, the vibration and/or sound may occur when a tool and a process target article, installed in the processing machine 200, contact each other during a processing operation. Further, the vibration and/or sound may occur by the tool alone or the processing machine 200 alone. The number of the detection units 225 is arbitrary. For example, a plurality of the detection units 225 can be provided for detecting the same physical quantity or a plurality of the detection units 225 can be provided to detect different physical quantities. For example, if a tool such as a blade used for processing is broken and chipping of the blade occurs, the vibration and sound during the processing operation change. Therefore, by detecting vibration data and acoustic data using the detection unit 225 and evaluating the detected vibration data and acoustic data based on a model generated for determining whether specific vibration and specific sound are normal vibration and normal sound, the abnormality in the operation of the processing machine 200 can be detected.

As illustrated in FIG. 1, the diagnosis apparatus 100 includes, for example, a communication control unit 111, an acquisition unit 112, a grouping unit 113, a feature extraction unit 114, a generation unit 115, an abnormality determination unit 116, a storage unit 117, an input unit 118, and a display control unit 119.

The communication control unit 111 is a functional unit that controls communication with the processing machine 200. For example, the communication control unit 111 receives the context information from the numerical control unit 221 of the processing machine 200 via the communication control unit 222.

The acquisition unit 112 includes, for example, a detection information acquisition unit 112a and a processing information acquisition unit 112b. The detection information acquisition unit 112a is a functional unit that receives the detection information from the detection unit 225 installed on the processing machine 200. The processing information acquisition unit 112b is a functional unit that acquires the context information received by the communication control unit 111 from the processing machine 200.

The grouping unit 113 includes, for example, a calculation unit 113a and a comparison unit 113b. The calculation unit 113a calculates a segment length of processing information during the normal operation of the processing machine 200 and/or resizes the processing information and also calculates a segment length of processing information during a diagnosis target operation of the processing machine 200. The comparison unit 113b compares a plurality of processing information acquired by the processing information acquisition unit 112b and determines that two or more processing information that match with each other as the same type of processing stage. The grouping unit 113 classifies or groups the detection information, which are detected during the normal operation of the processing machine 200, for each of the same type of processing stage.

The feature extraction unit 114 is a functional unit that extracts feature information used by the abnormality determination unit 116 for determining whether abnormality occurs in the processing machine 200, from the detection information grouped by the grouping unit 113 acquired for the normal operation of the processing machine 200 and the detection information output from the detection unit 225 of the processing machine 200 during a diagnosis target operation in the processing machine 200, in which the detection information output from the detection unit 225 of the processing machine 200 during the diagnosis target operation is processed as abnormality determination target data. The feature information can be any information that indicates characteristics of the detection information.

The generation unit 115 is a functional unit that generates a model used for determining whether the processing is performed normally in the processing machine 200. The model is generated for each group of processing information. If the model is to be generated by an external apparatus, the generation unit 115 may not be provided in the diagnosis apparatus 100.

The abnormality determination unit 116 is a functional unit that determines whether the processing machine 200 is operated normally or not based on the feature information extracted by the feature extraction unit 114 and the model generated for each processing information by the generation unit 115.

The storage unit 117 is a functional unit that stores the model generated by the generation unit 115 in association with the processing information. Further, the storage unit 117 stores the detection information acquired by the detection information acquisition unit 112a in association with the processing information.

The input unit 118 is a functional unit used for performing an operation such as inputting characters and numbers, selecting various instructions, and moving a cursor.

The display control unit 119 is a functional unit that controls a display operation of a display unit 119a. Specifically, the display control unit 119 causes the display unit 119a to display, for example, a result of abnormality determination determined by the abnormality determination unit 116. The display unit 119a is a functional unit that displays various kinds of information under the control of the display control unit 119.

Since the above described functional units of the diagnosis apparatus 100 and the processing machine 200 are examples of functions, the configuration of the diagnosis apparatus 100 and the processing machine 200 are not limited thereto. For example, a plurality of functional units illustrated in FIG. 1 as independent functional units can be integrated as one functional unit. On the other hand, the function included in one functional unit of FIG. 1 can be divided into a plurality of functional units to implement as a plurality of functional units.

Further, the processing machine 200 and the diagnosis apparatus 100 can be connected in any connection pattern. For example, the processing machine 200 and the diagnosis apparatus 100 can be connected using a wired network such as a dedicated communication connection line, a wired local area network (LAN) or a wireless network.

Further, FIG. 1 illustrates an example case that one processing machine 200 is connected to the diagnosis apparatus 100, but not limited thereto. For example, a plurality of processing machines 200 can be connected to the diagnosis apparatus 100 in a communicable environment.

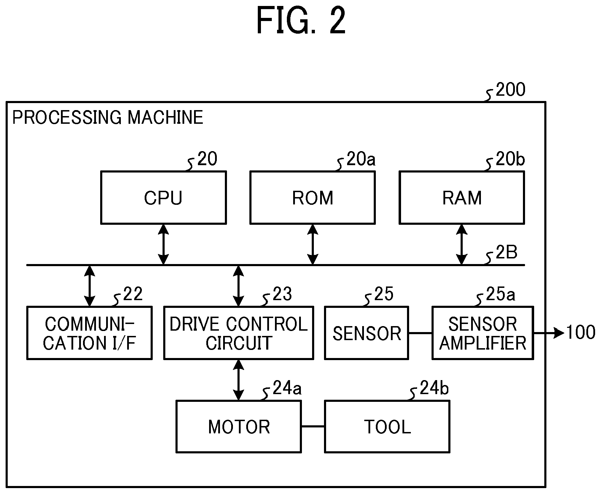

Hardware Configuration of Processing Machine:
Hereinafter, a description is given of an example of a hardware configuration of the processing machine 200 according to the embodiment with reference to FIG. 2. FIG. 2 illustrates an example of a hardware block diagram of the processing machine 200 according to the embodiment.

As illustrated in FIG. 2, the processing machine 200 includes, for example, a central processing unit (CPU) 20, a read only memory (ROM) 20a, a random access memory (RAM) 20b, a communication interface (I/F) 22, and a drive control circuit 23 communicatively connected to each other via a bus 2B.

The CPU 20 is a computing device, such as one or more processors, which controls the processing machine 200 entirely. For example, by executing one or more programs stored in ROM 20a or the like using the RAM 20b as a working memory, the CPU 20 controls the operation of processing machine 200 entirely to implement processing functions. For example, the numerical control unit 221 (FIG. 1) is implemented by executing one or more programs by the CPU 20.

The communication I/F 22 is an interface used for communication with an external apparatus such as the diagnosis apparatus 100. The communication I/F 22 is, for example, a network interface card (NIC) or the like compatible to, for example, transmission control protocol/internet protocol (TCP/IP). The communication control unit 222 (FIG. 1) is implemented by, for example, the communication I/F 22 and one or more programs executed by the CPU 20.

The drive control circuit 23 is a circuit that controls driving of a motor 24a. The motor 24a drives a tool 24b used for processing, and the number of the motors 24a and the number of the tools 24b can be one or more. The tool 24b includes, for example, a drill, an end mill, a cutting tool, a grindstone, and a table to place a process target article thereon and to be moved in accordance with various processing stages. The drive control unit 223 (FIG. 1) is implemented by, for example, the drive control circuit 23. The drive unit 224 (FIG. 1) is implemented by, for example, the motor 24a.

A sensor 25 includes, for example, a microphone device, a vibration sensor, an acceleration sensor, an acoustic emission (AE) sensor, and the like, and is installed in the vicinity of one or more tools to detect vibration and/or sound of the one or more tools. A sensor amplifier 25a connected to the sensor 25 is communicatively connected to the diagnosis apparatus 100. The sensor 25 and the sensor amplifier 25a can be provided in the processing machine 200 in advance or can be attached later to the processing machine 200 manufactured as a completed machine. Further, the sensor amplifier 25a is not limited to being installed in the processing machine 200 but the sensor amplifier 25a can be installed in the diagnosis apparatus 100. The detection unit 225 (FIG. 1) is implemented by, for example, the sensor 25 and the sensor amplifier 25a.

The hardware configuration illustrated in FIG. 2 is just one example, and it is not necessary for the processing machine 200 to be equipped with all of the components and the processing machine 200 can be equipped with other components. For example, the numerical control unit 221 and the communication control unit 222 (FIG. 1) can be implemented by executing the program by the CPU 20 (FIG. 2), which means that the numerical control unit 221 and the communication control unit 222 can be implemented by software, a hardware resource such as integrated circuit (IC), or in combination of software and hardware resource.

Hardware Configuration of Diagnosis Apparatus:

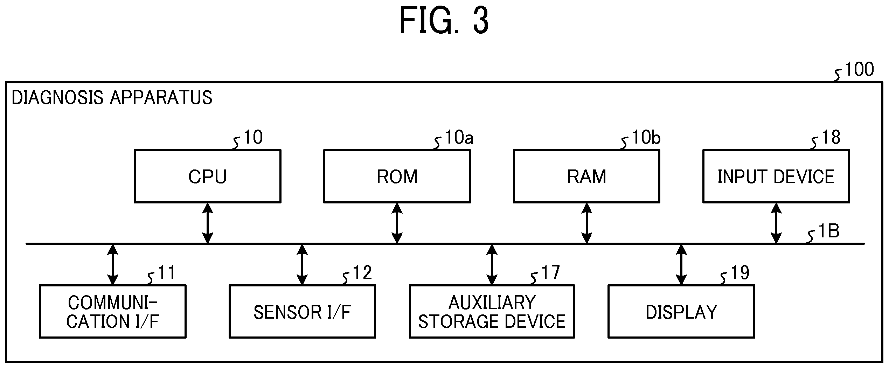

Hereinafter, a description is given of a hardware configuration of the diagnosis apparatus 100 according to the embodiment with reference to FIG. 3. FIG. 3 illustrates an example of a hardware block diagram of the diagnosis apparatus 100 according to the embodiment.

As illustrated in FIG. 3, the diagnosis apparatus 100 includes, for example, a CPU 10, a ROM 10a, a RAM 10b, a communication I/F 11, a sensor I/F 12, an auxiliary storage device 17, an input device 18, and a display 19 communicatively connected to each other via a bus 1B.

The CPU 10 is a computing device, such as one or more processors, which controls the diagnosis apparatus 100 entirely. For example, the CPU 10 controls the operation of the diagnosis apparatus 100 entirely by executing one or more programs stored in the ROM 10a using the RAM 10b as a working memory to implement the diagnosis function. The acquisition unit 112, the grouping unit 113, the feature extraction unit 114, the generation unit 115, the abnormality determination unit 116, and the display control unit 119 (FIG. 1) are implemented, for example, by executing the programs using the CPU 10.

The communication I/F 11 is an interface used for communication with an external apparatus such as the processing machine 200. The communication I/F 11 uses, for example, a network interface card (NIC) or the like compatible to, for example, transmission control protocol/internet protocol (TCP/IP). The communication control unit 111 (FIG. 1) is implemented by, for example, the communication I/F 11 and the program executed by the CPU 10 (FIG. 3).

The sensor I/F 12 is an interface that receives the detection information from the sensor 25 installed in the processing machine 200 via the sensor amplifier 25a. The detection information acquisition unit 112a (FIG. 1) is implemented by, for example, the sensor I/F 12 and the program executed by the CPU 10.

The auxiliary storage device 17 is a nonvolatile storage device such as, a hard disk drive (HDD), a solid state drive (SSD), and an electrically erasable programmable read-only memory (EEPROM), which stores various data, such as the configuration information or setting information of the diagnosis apparatus 100, the detection information and the context information (processing information) received from the processing machine 200, operating system (OS), and application programs. The auxiliary storage device 17 is provided in the diagnosis apparatus 100, but not limited thereto. For example, the auxiliary storage device 17 can be provided as an external storage device disposed outside the diagnosis apparatus 100 or the auxiliary storage device 17 can be provided as a storage device included in a server that can communicate data with the diagnosis apparatus 100. The storage unit 117 (FIG. 1) is implemented by, for example, the RAM 10b and the auxiliary storage device 17.

The input device 18 is an input device, such as a mouse and a keyboard used for inputting characters and numerals, selecting various instructions, and moving a cursor. The input unit 118 (FIG. 1) is implemented by, for example, the input device 18.

The display 19 is a display device, such as a cathode ray tube (CRT) display, liquid crystal display (LCD), or an organic electro-luminescence (OEL) display that display characters, numerals, and various screens, and icons used for operation. The display unit 119a (FIG. 1) is implemented by, for example, the display 19.

The hardware configuration illustrated in FIG. 3 is just one example, and the diagnosis apparatus 100 is not required to be equipped with all of the component devices and the diagnosis apparatus 100 can be equipped with other components. For example, each functional unit (communication control unit 111, acquisition unit 112, grouping unit 113, feature extraction unit 114, generation unit 115, abnormality determination unit 116, and display control unit 119) of the diagnosis apparatus 100 (FIG. 1) can be implemented by executing the programs by the CPU 10, which means that each functional unit of the diagnosis apparatus 100 can be implemented by software, a hardware resource such as integrated circuit (IC), or in combination of software and hardware resource. Further, if the diagnosis apparatus 100 is dedicated for diagnosing the processing machine 200 and transmitting the diagnosis result to an external server or the like, the input device 18 and the display 19 may not be provided in the diagnosis apparatus 100.

### Operation of Diagnosis Apparatus:

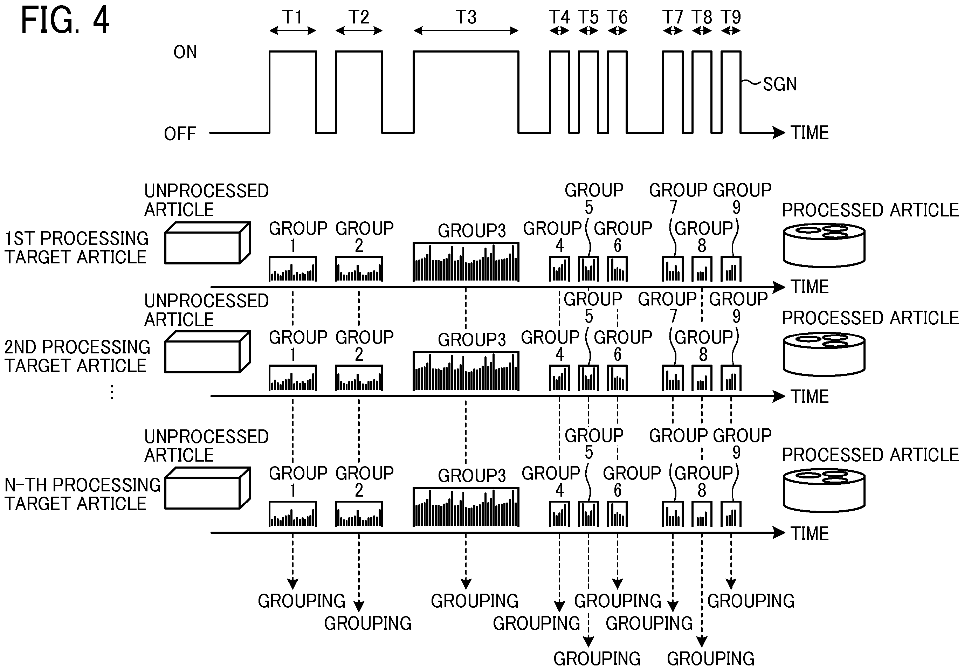

Hereinafter, a description is given of an example of operation by the diagnosis apparatus 100 according to the embodiment with reference to FIGs. 4 to 6.

FIG. 4 is an example of a schematic diagram of a grouping operation of the diagnosis apparatus 100 according to the embodiment. In an example case in FIG. 4, it is assumed that the processing information is a cutting feed signal SGN while the detection information is frequency data acquired or obtained from a vibration sensor signal or a microphone device signal (vibration data or acoustic data). In an example case of FIG. 4, the processing operation of a process target article includes nine stages (1st to 9th stages) to complete the processing operation, and each stage corresponds to different cutting segments. In this description, each of the segments, such as the cutting segments, indicates an operation segment. The data to be described below is acquired when the processing machine 200 is being operated in a normal state.

As illustrated in FIG. 4, when a process target article (unprocessed article), which is a first process target article, is conveyed into the processing machine 200, the drive unit 224 starts a feed operation of the first process target article at the first stage. In the first stage, the cutting feed signal SGN switches from OFF to ON. After finishing the processing at the first stage, the cutting feed signal SGN switches from ON to OFF. The cutting feed signal SGN is output from the numerical control unit 221 to the communication control unit 222 and then acquired by the processing information acquisition unit 112b via the communication control unit 111 of the diagnosis apparatus 100.

Further, the vibration and sound occurred by the processing operation performed by the drive unit 224 at the first stage is detected by the detection unit 225. The detection unit 225 outputs the detected frequency data of the vibration and/or sound to the diagnosis apparatus 100. The output frequency data of the vibration and/or sound is acquired by the detection information acquisition unit 112a of the diagnosis apparatus 100.

The cutting feed signal SGN in the first stage, acquired by the processing information acquisition unit 112b, is stored in the storage unit 117 of the diagnosis apparatus 100. The frequency data in the first stage, acquired by the detection information acquisition unit 112a, is stored in the storage unit 117 of the diagnosis apparatus 100 in association with the cutting feed signal SGN in the first stage.

Similarly, when the second stage of the first process target article is performed, the cutting feed signal SGN and the frequency data in the second stage are associated with each other and stored in the storage unit 117 of the diagnosis apparatus 100. The same sequence is also applied to the cutting feed signal SGN and the frequency data in the third to ninth stages of the first process target article. After completing the first to ninth stages of the first process target article, the first process target article (unprocessed article) is processed and manufactured into a processed article having a desired shape.

Similarly, the second to N-th process target articles (i.e., N indicates the number of process target articles) are processed from the first to ninth stages, and the cutting feed signal SGN and the frequency data associated with each process target article and each processing stage are stored in the storage unit 117 of the diagnosis apparatus 100.

Based on the data acquired as described above, the grouping unit 113 of the diagnosis apparatus 100 performs grouping of the frequency data of each processing stage.

When the grouping of frequency data is performed, the calculation unit 113a of the grouping unit 113 calculates a length of a cutting segment T1 (i.e., cutting segment length) in the first stage of the first process target article based on a segment where the cutting feed signal SGN is turned ON in the first stage of the first process target article.

Further, the grouping unit 113 checks whether any cutting segment length is already stored in the storage unit 117. Since the checked data is the cutting segment length in the first stage of the first process target article, no cutting segment length is stored in the storage unit 117 at the first stage of the first process target article. Therefore, the grouping unit 113 stores the frequency data of the cutting segment T1 in the first stage of the first process target article as a group 1 in the storage unit 117.

Further, the calculation unit 113a calculates a length (e.g., cutting segment length) of a cutting segment T2 in the second stage of the first process target article based on a segment where the cutting feed signal SGN is turned ON in the second stage of the first process target article.

Then, the comparison unit 113b of the grouping unit 113 compares the cutting segment length (first length) in the first stage of the first process target article already stored in the storage unit 117 and the cutting segment length (second length) in the second stage of the first process target article. The cutting segment length (first length) in the first stage of the first process target article and the cutting segment length (second length) in the second stage of the first process target article are different. Therefore, the grouping unit 113 stores the frequency data of the cutting segment T2 in the second stage of the first process target article as a group 2 in the storage unit 117.

In the same manner, the length (cutting segment length) of the cutting segments T3 to T9 respectively corresponding to the third to ninth stages of the first process target article are calculated and then the frequency data of the cutting segments T3 to T9 are stored in the storage unit 117 as groups 3 to 9, respectively.

Further, the grouping unit 113 repeats the same procedure to the first to ninth stages of a second process target article. The cutting segment length in the first stage of the second process target article is equal to the cutting segment length in the first stage of the first process target article. Therefore, the frequency data of the cutting segment T1 in the first stage of the second process target article is also stored as the group 1 in the storage unit 117 similar to the frequency data of the cutting segment T1 in the first stage of the first process target article. Similarly, the frequency data of the cutting segments T2 to T9 respectively corresponding to the second to ninth stages of the second process target article are stored in the storage unit 117 as the groups 2 to 9, respectively.

Further, the grouping unit 113 repeats the same procedure to the first to ninth stages of the third to N-th process target articles. That is, the frequency data of the cutting segments T1 to T9, respectively corresponding to the first to the ninth stages of the third to the N-th process target articles, are stored in the storage unit 117 as the group 1 to 9, respectively.

As described above, each frequency data is grouped or classified into one of the groups 1 to 9. In an example case in FIG. 4, the number of frequency data stored for each one of the groups 1 to 9 becomes "N," wherein "N" corresponds to the number of process target articles. In the above described example case, the cutting feed signal SGN is used for identifying the cutting segment, but the frequency data can be also used for identifying the cutting segment. For example, the cutting segment can be identified from the frequency data, such as the cutting segment can be identified based a change of frequency of frequency data and/or a change of amplification of frequency data.

Further, the frequency data can be used as supplemental data for identifying the cutting segment in addition to the cutting feed signal SGN. When the frequency data is used as the supplemental data, the cutting segment can be identified more accurately than identifying the cutting segment using the cutting feed signal SGN alone. Further, the data having higher accuracy for grouping can be extracted and used for learning later.

Hereinafter, a description is given of an example of a generation operation of a model by the diagnosis apparatus 100 according to the embodiment.

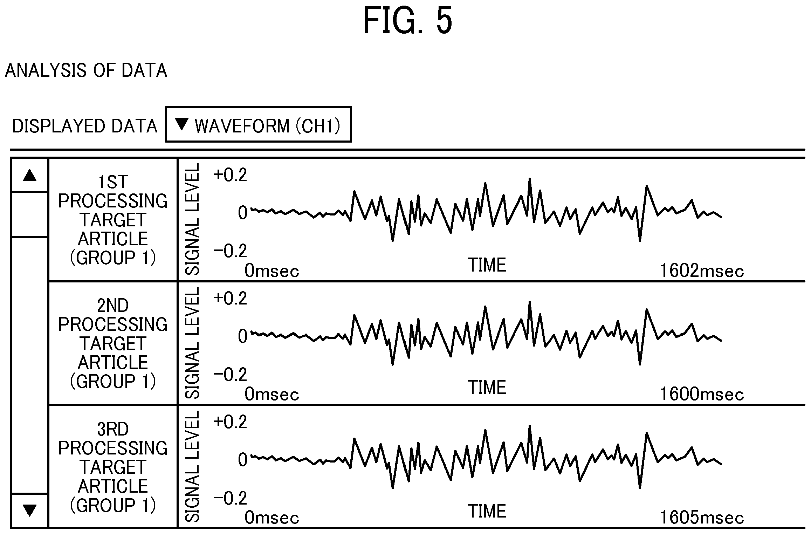

FIG. 5 illustrates an example of the frequency data of the first to third process target articles of the group 1. These frequency data can be displayed to a user, for example, using the display unit 119a. The feature extraction unit 114 extracts, for example, energy, frequency spectrum, and Mel-Frequency Cepstral Coefficient (MFCC) as the feature information from these frequency data.

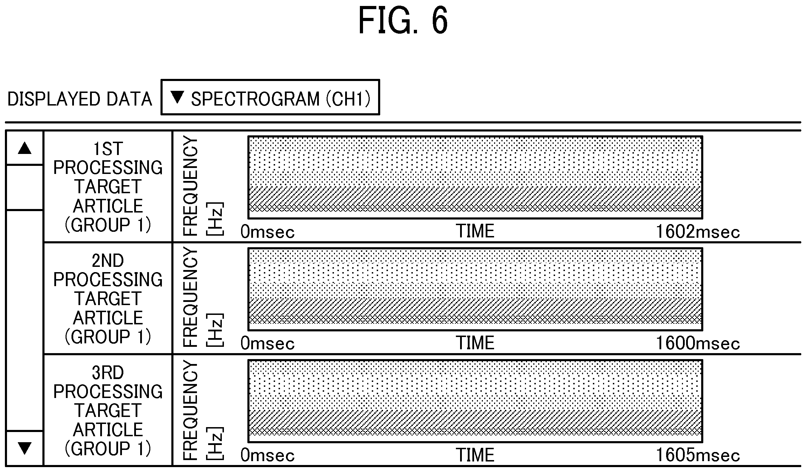

For example, FIG. 6 illustrates an example of the frequency spectrum of the first to third process target articles of the group 1 extracted by the feature extraction unit 114. The frequency spectrum can be displayed to a user by, for example, the display unit 119a. The feature extraction unit 114 extracts the feature information by performing, for example, the Fourier transform for each frame of the detection information. The frame means a data amount of the detection information detected within a given time period (e.g., 20 ms, 40 ms). For example, the frame corresponds to data amount of a window length when the feature information is a frequency spectrum acquired by performing the Fourier transformation to the detection information. The feature information extracted from the detection information, which is detected during the normal operation of the processing machine 200, is used for generating a model to be used for determining whether abnormality occurs in the processing machine 200. If the abnormality determination of the processing machine 200 becomes necessary, the feature information, extracted from the detection information, is compared with the above described model to perform the abnormality determination of the processing machine 200.

The generation unit 115 generates the model for each group corresponding to each processing stage based on correlation analysis of the feature information extracted by the feature extraction unit 114 from the detection information acquired during the normal operation of processing machine 200, and the machine learning or deep learning using the feature information. The generation unit 115 stores the generated model in the storage unit 117.

Hereinafter, a description is given of an example of an abnormality determination operation by the diagnosis apparatus 100 according to the embodiment.

The processing information acquisition unit 112b of the diagnosis apparatus 100 acquires the context information (processing information) from the processing machine 200. The detection information acquisition unit 112a of the diagnosis apparatus 100 acquires the detection information corresponding to the context information from the processing machine 200. The concerned detection information is used as target data for determining abnormality of the processing machine 200 (abnormality determination target data).

When the detection information used as the abnormality determination target data is acquired, the feature extraction unit 114 extracts feature information from the detection information used as the abnormality determination target data as similar to the model generation.

Based on the context information acquired from the processing machine 200, the abnormality determination unit 116 reads out the model corresponding to a specific processing stage that matches the processing stage where the detection information (abnormality determination target data) is acquired, from the storage unit 117, in which the specific processing stage and the processing stage where the detection information (abnormality determination target data) is acquired are the same type of the processing stage. The abnormality determination unit 116 uses the read model to calculate the likelihood indicating whether the feature information extracted from the detection information (abnormality determination target data) is normal or not. The abnormality determination unit 116 compares the calculated likelihood and a pre-set threshold. For example, if the calculated likelihood is equal to or greater than the pre-set threshold, the abnormality determination unit 116 determines that the operation of the processing machine 200 is normal. Further, if the calculated likelihood is less than the pre-set threshold, the abnormality determination unit 116 determines that the operation of the processing machine 200 is abnormal.

### Grouping by Diagnosis Apparatus:

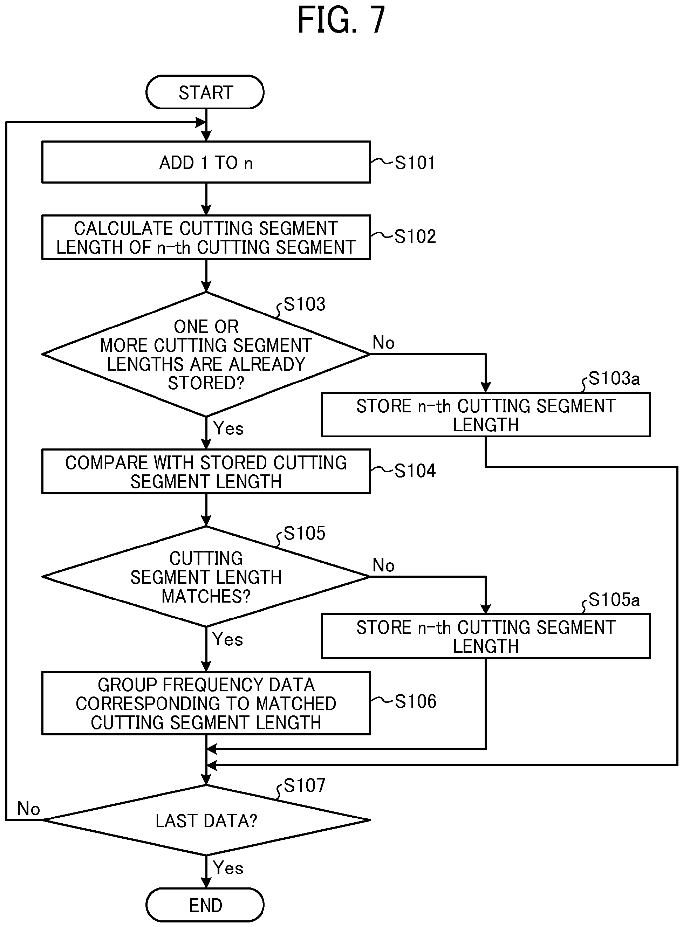

Hereinafter, a description is given of an example of grouping operation by the diagnosis apparatus 100 according to the embodiment with reference to FIG. 7. FIG. 7 is an example of a flow chart illustrating the steps of a procedure of grouping operation by the diagnosis apparatus 100 according to the embodiment.

As illustrated in FIG. 7, in step S101, the grouping unit 113 of the diagnosis apparatus 100 adds 1 to "n," wherein n = 0 at first, in which "n" indicates each stage of the first to the n-th stages, such as 1st, 2nd, 3rd, ... and 9th stages in FIG. 4.

In step S102, the calculation unit 113a of the grouping unit 113 calculates the cutting segment length of the n-th cutting segment.

In step S103, the grouping unit 113 refers to the storage unit 117 to check whether one or more cutting segment lengths are already stored in the storage unit 117. If no cutting segment length is stored in the storage unit 117 (S103: NO), in step S103a, the grouping unit 113 stores the cutting segment length of the n-th cutting segment calculated in step S102 (hereinafter, n-th cutting segment length) in the storage unit 117 as a new group.

If the one or more cutting segment lengths are already stored in the storage unit 117 (S103: YES), in step S104, the comparison unit 113b of the grouping unit 113 compares the cutting segment lengths stored in the storage unit 117 and the n-th cutting segment length calculated in step S102.

In step S105, the comparison unit 113b determines whether the n-th cutting segment length calculated in step S102 matches any one of the cutting segment lengths already stored in the storage unit 117. If the comparison unit 113b determines that the n-th cutting segment length calculated in step S102 does not match any one of the cutting segment lengths already stored in the storage unit 117 (S105: NO), in step S105a, the grouping unit 113 stores the n-th cutting segment length calculated in step S102 in the storage unit 117 as a new group.

If the comparison unit 113b determines that the n-th cutting segment length calculated in step S102 matches any one of the cutting segment lengths already stored in the storage unit 117 (S105: YES), in step S106, the grouping unit 113 groups the frequency data corresponding to the n-th cutting segment into a group of the frequency data corresponding to the cutting segment having the cutting segment length matched to the n-th cutting segment length calculated in step S102.

In step S107, the grouping unit 113 determines whether the data of the n-th cutting segment is the last data. If the data of the n-th cutting segment is not the last data (S107: NO), the sequence returns to step S101 and the sequence is repeated. If the data of the n-th cutting segment is the last data (S107: YES), the grouping operation is ended.

### Model Generation by Diagnosis Apparatus:

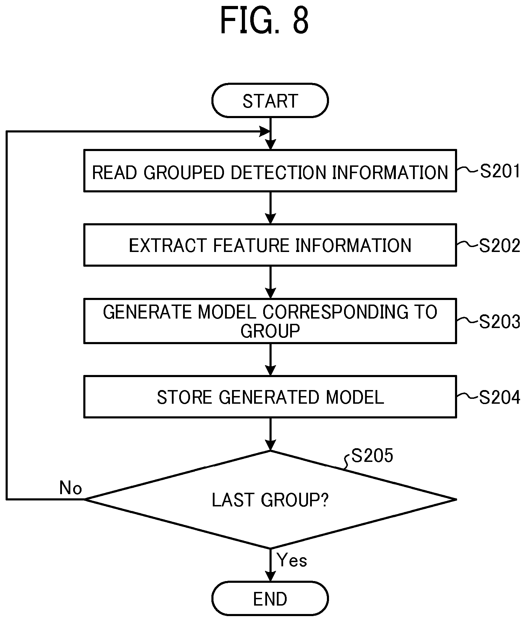

Hereinafter, a description is given of an example of a model generation processing by the diagnosis apparatus 100 according to the embodiment with reference to FIG. 8. FIG. 8 is an example of a flow chart illustrating the steps of a procedure of generating a model by the diagnosis apparatus 100 according to the embodiment.

As illustrated in FIG. 8, in step S201, the generation unit 115 of the diagnosis apparatus 100 reads the grouped detection information of a specific group from the storage unit 117.

In step S202, the feature extraction unit 114 of the diagnosis apparatus 100 extracts feature information from the grouped detection information read from the storage unit 117, in which the grouped detection information read from the storage unit 117 corresponds to the detection information detected by the detection unit 225 while the normal operation is being performed in the processing machine 200, and the grouped detection information read from the storage unit 117 is used as reference detection information when generating a model corresponding to the specific group.

In step S203, the generation unit 115 of the diagnosis apparatus 100 generates a model corresponding to the specific group based on the feature information extracted by the feature extraction unit 114.

In step S204, the generation unit 115 associates the generated model with, for example, the specific group and the feature information, and then stores the generated model associated with the specific group and the feature information in the storage unit 117.

In step S205, the generation unit 115 determines whether the data of the specific group is the data of the last group. If the data of the specific group is not the data of the last group (S205: NO), the sequence returns to step S201 and the sequence is repeated. If the data of the specific group is the data of the last group (S205: YES), the model generation is ended.

### Diagnosis Processing by Diagnosis Apparatus:

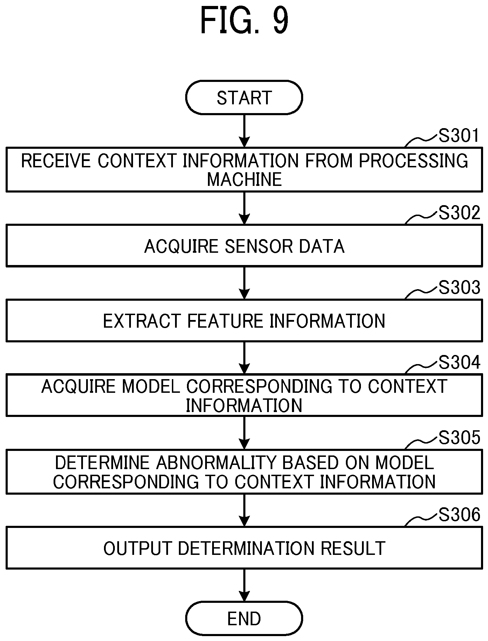

Hereinafter, a description is given of an example of a diagnosis processing by the diagnosis apparatus 100 according to the embodiment with reference to FIG. 9. FIG. 9 is an example of a flow chart illustrating the steps of a procedure of a diagnosis processing by the diagnosis apparatus 100 according to the embodiment.

As illustrated in FIG. 9, in step S301, the communication control unit 111 of the diagnosis apparatus 100 receives the context information transmitted from the processing machine 200. Then, the processing information acquisition unit 112b of the diagnosis apparatus 100 acquires the context information received by the communication control unit 111.

In step S302, the detection information acquisition unit 112a of the diagnosis apparatus 100 acquires the detection information (e.g., sensor data) transmitted from the processing machine 200.

In step S303, the feature extraction unit 114 of the diagnosis apparatus 100 extracts the feature information from the acquired detection information (e.g., sensor data).

In step S304, the abnormality determination unit 116 of the diagnosis apparatus 100 acquires a model, corresponding to the context information acquired by the processing information acquisition unit 112b, from the storage unit 117. That is, based on the context information acquired by the processing information acquisition unit 112b, the abnormality determination unit 116 acquires the model corresponding to the cutting segment length indicating any one of processing stages (e.g., first to ninth stages in FIG. 4), which are set as the stages for processing the process target article (processing stages of process target article).

In step S305, the abnormality determination unit 116 determines whether the processing machine 200 is operated normally using the extracted feature information and the model corresponding to the acquired context information.

In step S306, the abnormality determination unit 116 outputs a determination result. The determination result can be output using any method. For example, the abnormality determination unit 116 can instruct the display control unit 119 of the diagnosis apparatus 100 to display the determination result using the display unit 119a. Alternatively, the abnormality determination unit 116 can output the determination result to an external apparatus, such as a server and a personal computer (PC).

The diagnosis processing by the diagnosis apparatus 100 is performed as described above.

As to an information acquisition apparatus of conventional technology (JP-2017-033346-A), the time series data of machine information such as the load of a main spindle and the event data of an apparatus such as the program name, the tool number, and the override value input by an operation by an operator are corresponded with each other and then output for diagnosis, and then the abnormality of the processing operation is detected. As to the processing operation including many processing stages, it is required to synchronize the time series data of machine information with the event data of the apparatus and to determine the same type of processing stage to detect the abnormality for each processing stage. However, since these data are acquired using different interfaces (I/Fs) of different systems, it is difficult to synchronize the time series data of machine information with the event data of the apparatus, and it is difficult to identify the same type of processing stage.

As to the diagnosis apparatus 100 of the above described embodiment, the same type of processing stage can be easily identified by comparing the processing information being different in accordance with the types of processing stages. With this configuration, the abnormality in each processing stage can be detected easily. Further, by grouping the detection information for each of the same type of processing stage, the detection information can be visualized for each processing stage, and a comparison of the detection information for each processing stage becomes easier. Further, by grouping the detection information for each of the same type of processing stage, the precision of analysis performance of each processing stage can be improved. Variant Example 1:

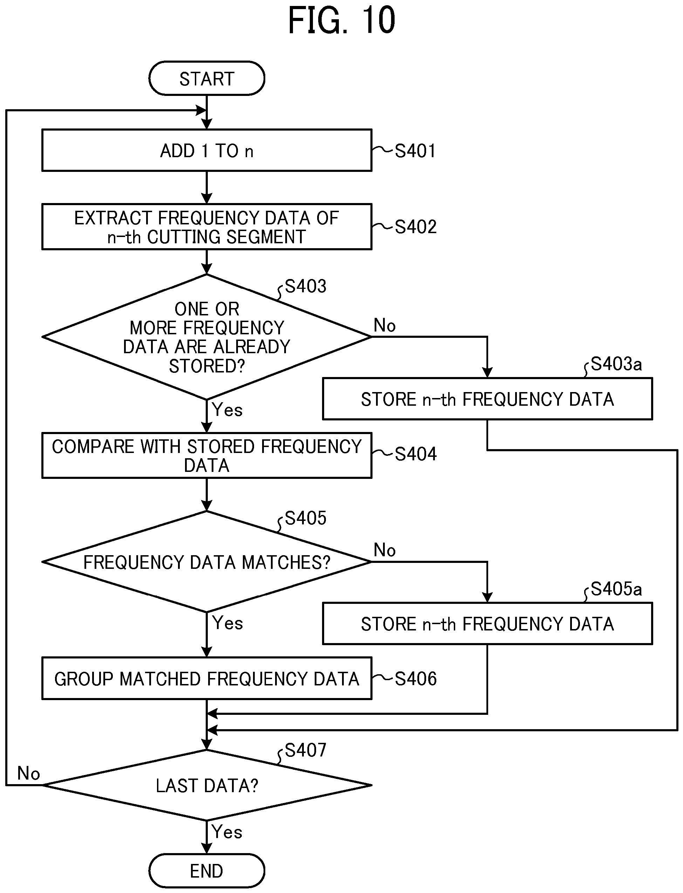

Hereinafter, a description is given of a grouping operation by the diagnosis apparatus 100 according to variant example 1 of the embodiment with reference to FIG. 10. Different from the above described embodiment, the grouping operation by the diagnosis apparatus 100 of variant example 1 uses the detection information also as the processing information. That is, the grouping operation by the diagnosis apparatus 100 of variant example 1 uses the frequency data, such as vibration sensor signal or microphone device signal, as the processing information, and further uses the frequency data, such as vibration sensor signal or microphone device signal, as the detection information.

As illustrated in FIG. 10, in step S401, the grouping unit 113 of the diagnosis apparatus 100 adds 1 to "n," wherein n = 0 at first, in which "n" indicates each stage of the first to the n-th stages, such as 1st, 2nd, 3rd, ... and 9th stages in FIG. 4.

In step S402, the grouping unit 113 extracts the frequency data of the n-th cutting segment (hereinafter, n-th frequency data).

In step S403, the grouping unit 113 refers to the storage unit 117 to check whether one or more frequency data are already stored in the storage unit 117. If no frequency data is stored in the storage unit 117 (S403: NO), in step S403a, the grouping unit 113 stores the n-th frequency data, extracted in step S402, in the storage unit 117 as a new group.

If the one or more frequency data are already stored in the storage unit 117 (S403: YES), in step S404, the comparison unit 113b of the grouping unit 113 compares the frequency data stored in the storage unit 117 and the n-th frequency data extracted in step S402. If a length of the n-th frequency data is different from a length of the comparing frequency data, the n-th frequency data is resized. The comparison of frequency data can be performed using the correlation analysis of waveform region or frequency region, the analysis using root-mean-square (RMS), the clustering analysis, or the like.

In step S405, the comparison unit 113b determines whether the n-th frequency data, extracted in step S402, matches any one of the frequency data stored in the storage unit 117. If the comparison unit 113b determines that the n-th frequency data, extracted in step S402, does not match any one of the frequency data stored in the storage unit 117 (S405: NO), in step S405a, the grouping unit 113 stores the n-th frequency data, extracted in step S402, in the storage unit 117 as a new group.

If the comparison unit 113b determines that the n-th frequency data, extracted in step S402, matches any one of the frequency data stored in the storage unit 117 (S405: YES), in step S406, the n-th frequency data, extracted in step S402, is grouped into a group of the frequency data that matches the n-th frequency data.

In step S407, the grouping unit 113 determines whether the n-th frequency data is the last data. If the n-th frequency data is not the last data (S407: NO), the sequence returns to step S401 and the sequence is repeated. If the n-th frequency data is the last data (S407: YES), the grouping operation is ended.

As to the diagnosis apparatus 100 of variant example 1, the detection information being different in accordance with the type of processing stage is used as the processing information, and the same type of processing stage can be easily identified by comparing the detection information being different in accordance with the type of processing stage. Therefore, the processing stage can be identified more easily without using information corresponding to different interfaces, such as cutting segments.

### Variant Example 2:

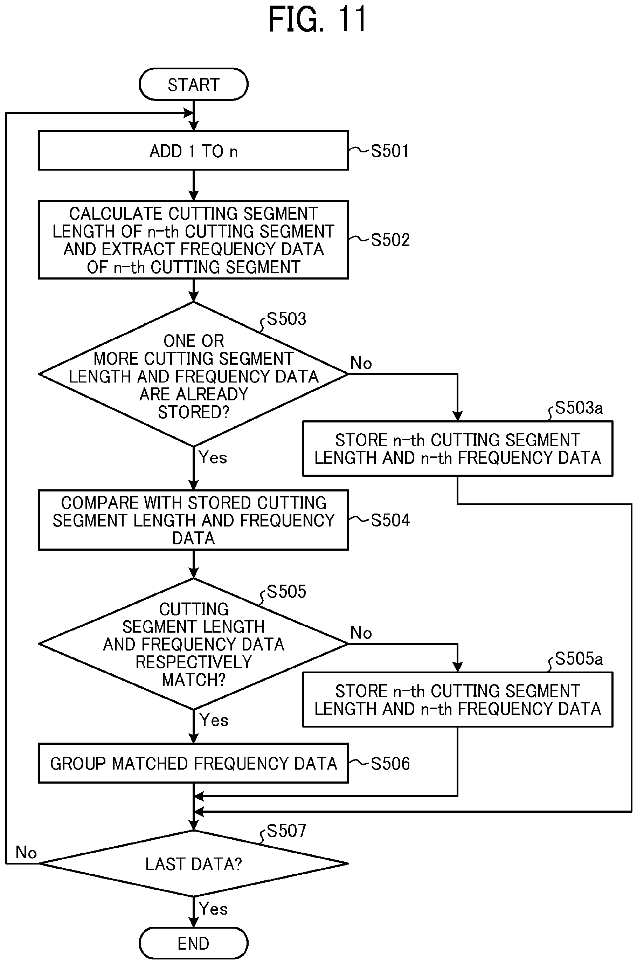

Hereinafter, a description is given of a grouping operation by the diagnosis apparatus 100 according to variant example 2 of the embodiment with reference to FIG. 11. Different from the above described embodiment, the grouping operation by the diagnosis apparatus 100 of variant example 2 collectively uses the context information and the detection information as the processing information. That is, the grouping operation by the diagnosis apparatus 100 of variant example 2 uses the cutting segment length and the frequency data (e.g., vibration sensor signal or microphone device signal) as the processing information, and further uses the frequency data (e.g., vibration sensor signal or microphone device signal) as the detection information.

As illustrated in FIG. 11, in step S501, the grouping unit 113 of the diagnosis apparatus 100 adds 1 to "n," wherein n = 0 at first, in which "n" indicates each stage of the first to the n-th stages, such as 1st, 2nd, 3rd, ... and 9th stages in FIG. 4.

In step S502, the calculation unit 113a of the grouping unit 113 calculates the cutting segment length of the n-th cutting segment (hereinafter, n-th cutting segment length), and further, the grouping unit 113 extracts the frequency data of the n-th cutting segment (hereinafter, n-th frequency data).

In step S503, the grouping unit 113 refers to the storage unit 117 to check whether one or more cutting segment lengths and frequency data are already stored in the storage unit 117. If no cutting segment length and frequency data are stored in the storage unit 117 (S503: NO), in step S503a, the grouping unit 113 stores the n-th cutting segment length and the n-th frequency data, respectively calculated and extracted in step S502, in the storage unit 117 as a new group.

If the one or more cutting segment lengths and frequency data are already stored in the storage unit 117 (S503: YES), in step S504, the comparison unit 113b of the grouping unit 113 compares the cutting segment lengths stored in the storage unit 117 and the n-th cutting segment length, and further, the comparison unit 113b compares the frequency data corresponding to the one or more cutting segment lengths stored in the storage unit 117 and the n-th frequency data.

In step S505, the comparison unit 113b determines whether the n-th cutting segment length and the n-th frequency data respectively match any one of the cutting segment lengths and frequency data stored in the storage unit 117. If the comparison unit 113b determines that the n-th cutting segment length and the n-th frequency data do not match any one of the cutting segment lengths and frequency data stored in the storage unit 117 (S505: NO), in step S505a, the grouping unit 113 stores the n-th cutting segment length and the n-th frequency data corresponding to the n-th cutting segment as a new group in the storage unit 117.

If the comparison unit 113b determines that the n-th cutting segment length and the n-th frequency data respectively match any one of the cutting segment lengths and frequency data stored in the storage unit 117 (S505: YES), in step S506, the n-th frequency data corresponding to the n-th cutting segment is grouped into a group of the frequency data having the cutting segment length and the frequency data respectively matching the n-th cutting segment length and the n-th frequency data.

In step S507, the grouping unit 113 determines whether the data of the n-th cutting segment is the last data. If the data of the n-th cutting segment is not the last data (S507: NO), the sequence returns to step S501 and the sequence is repeated. If the data of the n-th cutting segment is the last data (S507: YES), the grouping operation is ended.

As to the diagnosis apparatus 100 of variant example 2, a plurality of the processing information is combined and used as the processing information. With this configuration, for example, even if one processing stage and another processing stage might have the same cutting segment length, a misrecognition that the one processing stage and another processing stage are the same type of processing stage can be reduced, in particular prevented.

As to the above described embodiment and variant examples, the diagnosis apparatus, the diagnosis method, and the carrier means can be used to easily detect abnormality at each processing stage. The processing information is, for example, any one of segment data indicating an operation segment of the target apparatus, a vibration sensor signal, and a microphone device signal. The detection information is, for example, any one of segment data indicating an operation segment of the target apparatus, a vibration sensor signal, and a microphone device signal.

### Other Variant Examples:

In the above described embodiment and variant examples, the detection information is, for example, vibration data and/or acoustic data (e.g., audio data, sound data), but not limited thereto. For example, other data, such as current value, load and torque of the motor can be used as the detection information.

In the above described embodiment and variant examples, the apparatus to be diagnosed (i.e., target apparatus) is the processing machine 200 such as the machining machine, but not limited thereto. For example, the apparatus to be diagnosed can be any machine such as assembly machine, measurement machine, inspection machine, and cleaning machine.

It should be noted that the programs executed in the diagnosis system of the above described embodiment and each variant example may be provided in advance by a ROM or the like.

Further, the programs executed in the diagnosis system of the above described embodiment and each variant example may be recorded on a computer-readable recording medium such as a compact disc read only memory (CD-ROM), a flexible disk (FD), a compact disc recordable (CD-R), a digital versatile disk (DVD), a secure digital (SD) memory card, or the like in a file of an installable format or an executable format, and provided as a computer-readable program product.

Further, the programs executed in the diagnosis system of the above described embodiment and each variant example can be stored on a computer connected to a network such as the Internet, and downloaded via the network for providing the programs. Further, the programs executed in the diagnosis system in the above described embodiment and each variant example can be provided or distributed via a network such as the Internet.

The programs executed in the diagnosis system of the above described embodiment and each variant example employ module configurations, in which a CPU (one or more processors) reads the programs from a ROM and executes the programs on the main storage device to generate each functional unit on the main storage device.

Numerous additional modifications and variations are possible in light of the above teachings.

As described above, the present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A diagnosis apparatus (100) for diagnosing a target apparatus (200) configured to perform a plurality of processing stages to process a target article, the diagnosis apparatus (100) comprising:
a processor (10) configured to
identify each one of the plurality of processing stages as a different processing stage from
each other based on processing information uniquely associated with each one of the plurality of processing stages;
receive a plurality of detection information output from a detector (225, 25, 25a) configured to detect a physical quantity that changes in the target apparatus (200) depending on processing at each one of the plurality of the processing stages performed in the target apparatus (200) while performing a normal operation in the target apparatus (200);
group the plurality of detection information of the target apparatus (200), which are received while performing the normal operation in the target apparatus (200), into a plurality of groups, based on contents of the plurality of detection information, by corresponding each one of the groups respectively to each one of the plurality of processing stages, so as to prepare reference detection information for each one of the plurality of processing stages;
receive a plurality of detection information output from the detector (225, 25, 25a) while performing a diagnosis target operation in the target apparatus (200); and
determine whether abnormality occurs in the target apparatus (200) during the diagnosis target operation based on the reference detection information and the plurality of detection information output from the detector (225, 25, 25a) during the diagnosis target operation,
**characterised in that** the processor (10) is adapted to use segment data indicating an operation segment set for the target apparatus (200) as the processing information to calculate a segment length of the operation segment,
wherein the processor (10) is adapted to use
frequency data acquired from at least any one of a vibration sensor signal and a microphone device signal as the plurality of detection information of the target apparatus (200), and to group two or more of the detection information corresponding to specific segment data matching the segment length as one group.

2. The diagnosis apparatus (100) of claim 1, further comprising a memory (10b, 17) that stores the processing information and the detection information,
wherein the processor (10) is adapted to store
the two or more of the detection information grouped as the one group in the memory (10b, 17) in association with the corresponding specific segment data.

3. The diagnosis apparatus (100) according to claim 1,
wherein the processor (10) is adapted to determine whether abnormality occurs in the target apparatus (200) during the diagnosis target operation, for each one of the groups respectively corresponding to each one of the plurality of processing stages, based on the reference detection information and the plurality of detection information output from the detector (225, 25, 25a) during the diagnosis target operation.

4. A method of diagnosing a target apparatus (200) configured to perform a plurality of processing stages to process a target article, the method comprising:
identifying each one of the plurality of processing stages as a different processing stage from
each other based on processing information uniquely associated with each one of the plurality of processing stages;
receiving a plurality of detection information output from a detector (225, 25, 25a) configured to detect a physical quantity that changes in the target apparatus (200) depending on processing at each one of the plurality of the processing stages performed in the target apparatus (200) while performing a normal operation in the target apparatus (200);
grouping the plurality of detection information of the target apparatus (200), which are received while performing the normal operation in the target apparatus (200), into a plurality of groups, based on contents of the plurality of detection information, by corresponding each one of the groups respectively to each one of the plurality of processing stages to prepare reference detection information for each one of the plurality of processing stages;
receiving a plurality of detection information output from the detector (225, 25, 25a) while performing a diagnosis target operation in the target apparatus (200); and
determining whether abnormality occurs in the target apparatus (200) during the diagnosis target operation based on the reference detection information and the plurality of detection information output from the detector (225, 25, 25a) during the diagnosis target operation,
**characterised in that** the method further comprises:
using segment data indicating an operation segment set for the target apparatus (200) as the processing information to calculate a segment length of the operation segment;
using frequency data acquired from at least any one of a vibration sensor signal and a microphone device signal as the plurality of detection information of the target apparatus (200); and
grouping two or more of the detection information corresponding to specific segment data matching the segment length as one group.

5. A computer readable medium comprising a computer readable code that, when executed by a processor, cause the processor to carry out the method of claim 4.

## Patentansprüche

1. Diagnosevorrichtung (100) zum Diagnostizieren einer Zielvorrichtung (200), die dafür konfiguriert ist, eine Vielzahl von Verarbeitungsstufen durchzuführen, um einen Zielartikel zu verarbeiten, wobei die Diagnosevorrichtung (100) Folgendes umfasst:
einen Prozessor (10), der zu Folgendem konfiguriert ist:
jede der Vielzahl von Verarbeitungsstufen auf Grundlage von Verarbeitungsinformationen, die eindeutig mit jeder der Vielzahl von Verarbeitungsstufen verknüpft sind, als eine voneinander verschiedene Verarbeitungsstufe zu identifizieren,
eine Vielzahl von Erfassungsinformationen zu empfangen, die von einem Detektor (225, 25, 25a) ausgegeben werden, der dafür konfiguriert ist, eine physikalische Größe zu erfassen, die sich in der Zielvorrichtung (200) in Abhängigkeit von einer Verarbeitung auf jeder der Vielzahl von Verarbeitungsstufen, die in der Zielvorrichtung (200) durchgeführt werden, ändert, während ein normaler Betrieb in der Zielvorrichtung (200) durchgeführt wird,
die Vielzahl von Erfassungsinformationen der Zielvorrichtung (200), die empfangen werden, während ein normaler Betrieb in der Zielvorrichtung (200) durchgeführt wird, zu einer Vielzahl von Gruppen zu gruppieren, auf Grundlage von Inhalten der Vielzahl von Erfassungsinformationen, dadurch, dass jede der Gruppen jeweils einer der Vielzahl von Verarbeitungsstufen entspricht, um so Referenz-Erfassungsinformationen für jede der Vielzahl von Verarbeitungsstufen vorzubereiten,
eine Vielzahl von Erfassungsinformationen zu empfangen, die von einem Detektor (225, 25, 25a) ausgegeben werden, während ein Diagnose-Zielbetrieb in der Zielvorrichtung (200) durchgeführt wird, und
festzustellen, ob in der Zielvorrichtung (200) während des Diagnose-Zielbetriebs eine Abweichung auftritt, auf Grundlage der Referenz-Erfassungsinformationen und der Vielzahl von Erfassungsinformationen, die während des Diagnose-Zielbetriebs von dem Detektor (225, 25, 25a) ausgegeben werden,
**dadurch gekennzeichnet, dass** der Prozessor (10) angepasst ist, um Segmentdaten, die einen Betriebssegment angeben, das für die Zielvorrichtung (200) festgesetzt ist, als die Verarbeitungsinformationen zu verwenden, um eine Segmentlänge des Betriebssegments zu berechnen,
wobei der Prozessor (10) angepasst ist, um Frequenzdaten, die von mindestens einem von einem Vibrationssensorsignal und einem Mikrofonvorrichtungssignal erfasst werden, als die Vielzahl von Erfassungsinformationen der Zielvorrichtung (200) zu verwenden und zwei oder mehr der Erfassungsinformationen entsprechend spezifischen Segmentdaten, die zu der Segmentlänge passen, als eine Gruppe zu gruppieren.

2. Diagnosevorrichtung (100) nach Anspruch 1, die ferner einen Speicher (10b, 17) umfasst, der die Verarbeitungsinformationen und die Erfassungsinformationen speichert,
wobei der Prozessor (10) angepasst ist, um zwei oder mehr der Erfassungsinformationen, die als die eine Gruppe gruppiert sind, in dem Speicher (10b, 17) in Verknüpfung mit den entsprechenden spezifischen Segmentdaten zu speichern.

3. Diagnosevorrichtung (100) nach Anspruch 1,
wobei der Prozessor (10) angepasst ist, um, für jede der Gruppen, die jeweils jeder der Vielzahl von Verarbeitungsstufen entsprechen, festzustellen, ob in der Zielvorrichtung (200) während des Diagnose-Zielbetriebs eine Abweichung auftritt, auf Grundlage der Referenz-Erfassungsinformationen und der Vielzahl von Erfassungsinformationen, die während des Diagnose-Zielbetriebs von dem Detektor (225, 25, 25a) ausgegeben werden.

4. Verfahren zum Diagnostizieren einer Zielvorrichtung (200), die dafür konfiguriert ist, eine Vielzahl von Verarbeitungsstufen durchzuführen, um einen Zielartikel zu verarbeiten, wobei das Verfahren Folgendes umfasst:
Identifizieren jeder der Vielzahl von Verarbeitungsstufen auf Grundlage von Verarbeitungsinformationen, die eindeutig mit jeder der Vielzahl von Verarbeitungsstufen verknüpft sind, als eine voneinander verschiedene Verarbeitungsstufe,
Empfangen einer Vielzahl von Erfassungsinformationen, die von einem Detektor (225, 25, 25a) ausgegeben werden, der dafür konfiguriert ist, eine physikalische Größe zu erfassen, die sich in der Zielvorrichtung (200) in Abhängigkeit von einer Verarbeitung auf jeder der Vielzahl von Verarbeitungsstufen, die in der Zielvorrichtung (200) durchgeführt werden, ändert, während ein normaler Betrieb in der Zielvorrichtung (200) durchgeführt wird,
Gruppieren der Vielzahl von Erfassungsinformationen der Zielvorrichtung (200), die empfangen werden, während der normale Betrieb in der Zielvorrichtung (200) durchgeführt wird, zu einer Vielzahl von Gruppen, auf Grundlage von Inhalten der Vielzahl von Erfassungsinformationen, dadurch, dass jede der Gruppen jeweils einer der Vielzahl von Verarbeitungsstufen entspricht, um Referenz-Erfassungsinformationen für jede der Vielzahl von Verarbeitungsstufen vorzubereiten,
Empfangen einer Vielzahl von Erfassungsinformationen, die von einem Detektor (225, 25, 25a) ausgegeben werden, während ein Diagnose-Zielbetrieb in der Zielvorrichtung (200) durchgeführt wird, und
Feststellen, ob in der Zielvorrichtung (200) während des Diagnose-Zielbetriebs eine Abweichung auftritt, auf Grundlage der Referenz-Erfassungsinformationen und der Vielzahl von Erfassungsinformationen, die während des Diagnose-Zielbetriebs von dem Detektor (225, 25, 25a) ausgegeben werden,
**dadurch gekennzeichnet, dass** das Verfahren ferner Folgendes umfasst:
Verwenden von Segmentdaten, die einen Betriebssegment angeben, das für die Zielvorrichtung (200) festgesetzt ist, als die Verarbeitungsinformationen, um eine Segmentlänge des Betriebssegments zu berechnen,
Verwenden von Frequenzdaten, die von mindestens einem von einem Vibrationssensorsignal und einem Mikrofonvorrichtungssignal erfasst werden, als die Vielzahl von Erfassungsinformationen der Zielvorrichtung (200) und
Gruppieren von zwei oder mehr der Erfassungsinformationen entsprechend spezifischen Segmentdaten, die zu der Segmentlänge passen, als eine Gruppe.

5. Rechnerlesbares Medium, das einen rechnerlesbaren Code umfasst, der, wenn er durch einen Prozessor ausgeführt wird, veranlasst, dass der Prozessor das Verfahren nach Anspruch 4 ausführt.

## Revendications

1. Appareil de diagnostic (100) permettant de diagnostiquer un appareil cible (200) configuré pour réaliser une pluralité de stades de traitement pour traiter un article cible, l'appareil de diagnostic (100) comprenant :
un processeur (10) configuré pour
identifier chacun de la pluralité de stades de traitement en tant que stade de traitement différent les uns des autres sur la base d'informations de traitement associées exclusivement à chacun de la pluralité de stades de traitement ;
recevoir une pluralité d'informations de détection émises en sortie par un détecteur (225, 25, 25a) configuré pour détecter une quantité physique qui varie dans l'appareil cible (200) en fonction d'un traitement au niveau de chacun de la pluralité des stades de traitement réalisés dans l'appareil cible (200) tout en réalisant une opération normale dans l'appareil cible (200) ;
grouper la pluralité d'informations de détection de l'appareil cible (200), qui sont reçues tout en réalisant l'opération normale dans l'appareil cible (200), en une pluralité de groupes, sur la base de contenus de la pluralité d'informations de détection, en faisant correspondre chacun des groupes respectivement à chacun de la pluralité de stades de traitement, de manière à préparer des informations de détection de références pour chacun de la pluralité de stades de traitement ;
recevoir une pluralité d'informations de détection émises en sortie par le détecteur (225, 25, 25a) tout en réalisant une opération cible de diagnostic dans l'appareil cible (200) ;
et
déterminer si une anomalie se produit dans l'appareil cible (200) pendant l'opération cible de diagnostic ou non, sur la base des informations de détection de références et de la pluralité d'informations de détection émises en sortie par le détecteur (225, 25, 25a) pendant l'opération cible de diagnostic,
**caractérisé en ce que** le processeur (10) est adapté pour utiliser des données de segment indiquant un segment d'opération établi pour l'appareil cible (200) en tant qu'informations de traitement pour calculer une longueur de segment du segment d'opération,
dans lequel le processeur (10) est adapté pour utiliser des données de fréquence acquises à partir d'au moins un parmi un signal de capteur de vibrations et un signal de dispositif de microphone en tant que pluralité d'informations de détection de l'appareil cible (200), et pour grouper deux ou plus des informations de détection correspondant à des données de segment spécifiques concordant avec la longueur de segment en tant qu'un groupe.

2. Appareil de diagnostic (100) selon la revendication 1, comprenant en outre une mémoire (10b, 17) qui stocke les informations de traitement et les informations de détection,
dans lequel le processeur (10) est adapté pour stocker les deux ou plus des informations de détection groupées en tant que le groupe dans la mémoire (10b, 17) en association avec les données de segment spécifiques correspondantes.

3. Appareil de diagnostic (100) selon la revendication 1,
dans lequel le processeur (10) est adapté pour déterminer si une anomalie se produit dans l'appareil cible (200) pendant l'opération cible de diagnostic ou non, pour chacun des groupes correspondant respectivement à chacun de la pluralité de stades de traitement, sur la base des informations de détection de références et de la pluralité d'informations de détection émises en sortie par le détecteur (225, 25, 25a) pendant l'opération cible de diagnostic.

4. Procédé de diagnostic d'appareil cible (200) configuré pour réaliser une pluralité de stades de traitement pour traiter un article cible, le procédé comprenant :
l'identification de chacun de la pluralité de stades de traitement en tant que stade de traitement différent les uns des autres sur la base d'informations de traitement associées exclusivement à chacun de la pluralité de stades de traitement ;
la réception d'une pluralité d'informations de détection émises en sortie par un détecteur (225, 25, 25a) configuré pour détecter une quantité physique qui varie dans l'appareil cible (200) en fonction d'un traitement au niveau de chacun de la pluralité des stades de traitement réalisés dans l'appareil cible (200) tout en réalisant une opération normale dans l'appareil cible (200) ;
le groupement de la pluralité d'informations de détection de l'appareil cible (200), qui sont reçues tout en réalisant l'opération normale dans l'appareil cible (200), en une pluralité de groupes, sur la base de contenus de la pluralité d'informations de détection, en faisant correspondre chacun des groupes respectivement à chacun de la pluralité de stades de traitement pour préparer des informations de détection de références pour chacun de la pluralité de stades de traitement ;
la réception d'une pluralité d'informations de détection émises en sortie par le détecteur (225, 25, 25a) tout en réalisant une opération cible de diagnostic dans l'appareil cible (200) ; et
la détermination du fait qu'une anomalie se produit dans l'appareil cible (200) ou non pendant l'opération cible de diagnostic sur la base des informations de détection de référence et de la pluralité d'informations de détection émises en sortie par le détecteur (225, 25, 25a) pendant l'opération cible de diagnostic,
**caractérisé en ce que** le procédé comprend en outre :
l'utilisation de données de segment indiquant un segment d'opération défini pour l'appareil cible (200) en tant qu'informations de traitement pour calculer une longueur de segment du segment d'opération ;
l'utilisation de données de fréquence acquises à partir d'au moins un parmi un signal de capteur de vibrations et un signal de dispositif de microphone en tant que pluralité d'informations de détection de l'appareil cible (200) ; et
le groupement de deux ou plus des informations de détection correspondant à des données de segment spécifiques concordant avec la longueur de segment en tant qu'un groupe.

5. Support lisible par ordinateur comprenant un code lisible par ordinateur qui, lorsqu'il est exécuté par un processeur, amène le processeur à réaliser le procédé selon la revendication 4.
